# EUROPEAN PATENT SPECIFICATION

(11) **EP 3 342 247 B1**
(45) Date of publication and mention of the grant of the patent: **25.09.2019**
(21) Application number: 16850391.0
(22) Date of filing: 30.09.2016
(51) Int. Cl.: H04W 8/18, H04W 76/18

(54) **METHOD OF ENHANCED TIMER HANDLING FOR SIM OR USIM CHANGE**
VERFAHREN ZUR VERBESSERTEN ZEITHANDHABUNG FÜR SIM- ODER USIM-WECHSEL
PROCÉDÉ D'AMÉLIORATION DE LA GESTION DE TEMPORISATEUR POUR LES CHANGEMENTS DE SIM OU D'USIM

(30) Priority: 30.09.2015 US 201562234897 P; 28.09.2016 US 201615279087
(43) Date of publication of application: 04.07.2018
(73) Proprietor: HFI Innovation Inc., Zhubei City, Hsinchu County 302 (TW)
(72) Inventor: HUANG-FU, Chien-Chun, Hsinchu City 300 (TW)
(74) Representative: Habermann, Hruschka & Schnabel
(86) International application number: PCT/CN2016/101044
(87) International publication number: WO 2017/054767

(56) References cited:
- EP-A1- 2 464 153
- EP-A1- 2 605 563
- CN-A- 103 517 325
- CN-A- 103 686 850
- US-A1- 2011 086 670
- US-B2- 8 983 423
- ALCATEL-LUCENT ET AL: "Correction on ESM congestion control handling", 3GPP DRAFT; 24301_CR2087R1_(REL-13)_C1-150648, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Sorrento; 20150202 - 20150206 4 March 2015 (2015-03-04), XP050928392, Retrieved from the Internet: URL:http://www.3gpp.org/ftp/Meetings_3GPP_ SYNC/CT/Docs/ [retrieved on 2015-03-04]

## Description

### TECHNICAL FIELD

The disclosed embodiments relate generally to wireless communication, and, more particularly, to method of enhanced timer handling for SIM/USIM change.

### BACKGROUND

The wireless communications network has grown exponentially over the years. A Long-Term Evolution (LTE) system offers high peak data rates, low latency, improved system capacity, and low operating cost resulting from simplified network architecture. LTE systems, also known as the 4G system, also provide seamless integration to older wireless network, such as GSM, CDMA and Universal Mobile Telecommunication System (UMTS). The 3^{rd} generation partner project (3GPP) network normally includes a hybrid of 2G/3G/4G systems. With the optimization of the network design, many improvements have developed over the evolution of various standards.

The main function of the Session Management (SM) for 2G/3G systems or Evolved Packet System (EPS) SM (ESM) for 4G systems is to support Packet Data Protocol (PDP) context or EPS bearer handling of the user terminal. SM procedures include PDP context activation procedure, secondary PDP context activation procedure, PDP context modification or deactivation procedure, and MBMS corresponding procedures. ESM procedures include PDN connectivity or disconnect procedures and Bearer resource allocation or modification procedures. To establish an EPS bearer in the 4G system, a UE sends a PDN connectivity request to the network. Upon reception of the SM/ESM request message, the network may either accept or reject the request due to network congestion. 3GPP introduces multiple timers to solve network congestion problem. For example, when a session management or EPS session management (SM/ESM) request is rejected by the network, the network may trigger a session management timer for APN based congestion control. Before the timer expiry, any further SM/ESM request triggered by the UE side will always fail because such request is barred by the network.

In addition to session management, Non Access stratum (NAS) level mobility management also utilizes various timers for congestion control. For example, T3245 is used to forbid massive MTC devices retry the attach procedure at the same time when receiving fatal cause values from the network. When NAS mobility management congestion control is active, a UE starts the mobility management back-off timer T3246 with the value received mobility management reject message in circuit switch (CS) domain. Similarly, when NAS mobility management congestion control is active, a UE starts the mobility management back-off timer T3346 with the value received mobility management reject message in packet switch (PS) domain. For subscribed APN based congestion control the value of timer T3346 for a particular access point name (APN) may be APN dependent.

It is very common that a user may replace the Subscriber Identity Module or Universal Subscriber Identity Module (SIM/USIM) inside a user equipment (UE). When those timers are triggered, the UE behavior is undefined when SIM/USIM is changed while UE keeps power-on. A solution is sought to enable SM/ESM procedures and UE react upon SIM/USIM change.

ALCATEL-LUCENT ET AL, "Correction on ESM congestion control handling", vol. CT WG1, no. Sorrento; 20150202 - 20150206, (20150304), 3GPP DRAFT; 24301_CR2087R1_(REL-13)_C1-150648, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, URL:
http://www.3gpp.org/ftp/Meetings_3GPP_SYNC/CT/Docs/ is concerned with EPS Session Management, ESM, congestion control handling under conditions including 'UE is switched off or 'USIM is removed' from a user equipment, UE, in a network as specified in 3GPP TS 24.301.

EP 2464153 A1 relates to switching of an active subscriber identity, i.e. a subscriber identity registered in a corresponding network, of a communication terminal.

The present invention is defined by the subject matter of the appended claims.

A method of timer handing upon SIM/USIM replacement is proposed. A user equipment (UE) initiates a session management (SM) or a mobility management (MM) request with a wireless network. The UE is attached to the network using a first SIM/USIM/profile. When NAS level session management (SM) or mobility management (MM) congestion control is active, the UE receives a SM/MM reject message from the network, which contains timer information. Based on the timer information, the UE starts a timer such that corresponding SM/MM request is barred. When a user replaces the first SIM/USIM/profile with a second SIM/USIM/profile while maintains power on, the UE stops the timer accordingly. As a result, the UE is able to initiate corresponding SM/MM request with the network.

In one embodiment, a user equipment (UE) receives a reject message in a mobile communication network. The UE is attached to the network using a first SIM/USIM/profile. The UE starts a timer in response to the reject message. The reject message is associated with a session management request or a mobility management request. The UE replaces the first SIM/USIM/profile with a second SIM/USIM/profile while the UE remains power on. The UE determines whether to stop the timer or continue to run the timer by comparing the first SIM/USIM/profile and the second SIM/USIM/profile. In one example, the reject message is ACTIVATE PDP CONTEXT REJECT, ACTIVATE MBMS CONTEXT REJECT, ACTIVATE SECONDARY PDP CONTEXT REJECT, DEACTIVATE PDP CONTEXT REQUEST or MODIFY PDP CONTEXT REJECT received with SM cause #26 and with a timer value for T3396, PDN CONNECTIVITY REJECT, BEARER RESOURCE MODIFICATION REJECT, BEARER RESOURCE ALLOCATION REJECT or DEACTIVATE EPS BEARER CONTEXT REQUEST received with ESM cause #26 and with a timer value for T3396. In another example, the reject message is ATTACH REJECT with a predefined timer value range for T3245. In one more example, the reject message is LOCATION UPDATING REJECT or CM SERVICE REJECT received with a timer value for T3246. In yet another example, the reject message is ATTACH REJECT, ROUTING AREA UPDATE REJECT or SERVICE REJECT received with a timer value for T3346, or ATTACH REJECT, TRACKING AREA UPDATE REJECT or SERVICE REJECT received with a timer value for T3346. The UE records the timer information carried by the reject message associated with its SIM/USIM/eUICC, or within the SIM/USIM/profile. Later, when a SIM/USIM card is inserted into the UE, the UE checks the timer information before triggering the attach procedure with the network.

Other embodiments and advantages are described in the detailed description below. This summary does not purport to define the invention. The invention is defined by the claims.

### BRIEF DESCRIPTION OF DRAWINGS

The accompanying drawings, where like numerals indicate like components, illustrate embodiments of the invention.
Figure 1 illustrates an exemplary 3GPP wireless network with an enhanced timer handling for SIM/USIM change in accordance with one novel aspect.
Figure 2 illustrates simplified block diagrams of a user equipment and a base station in accordance with embodiments of the current invention.
Figure 3 illustrates one embodiment of UE procedure and timer handling when SIM/USIM card is changed with timer running while power-on.
Figure 4 illustrates a solution for enabling SM/ESM procedures upon SIM/USIM replacement with enhanced timer handling.
Figure 5 illustrates a solution for enabling UE performing corresponding procedure for T3245 handling upon SIM/USIM replacement.
Figure 6 illustrates a solution for enabling UE performing corresponding procedure for T3246 handling upon SIM/USIM replacement.
Figure 7 illustrates a solution for enabling UE performing corresponding procedure for T3346 handling upon SIM/USIM replacement.
Figure 8 illustrates a flow chart for a method of timer handing upon SIM/USIM replacement from UE perspective in accordance with one novel aspect.

### DETAILED DESCRIPTION

Reference will now be made in detail to some embodiments of the invention, examples of which are illustrated in the accompanying drawings.

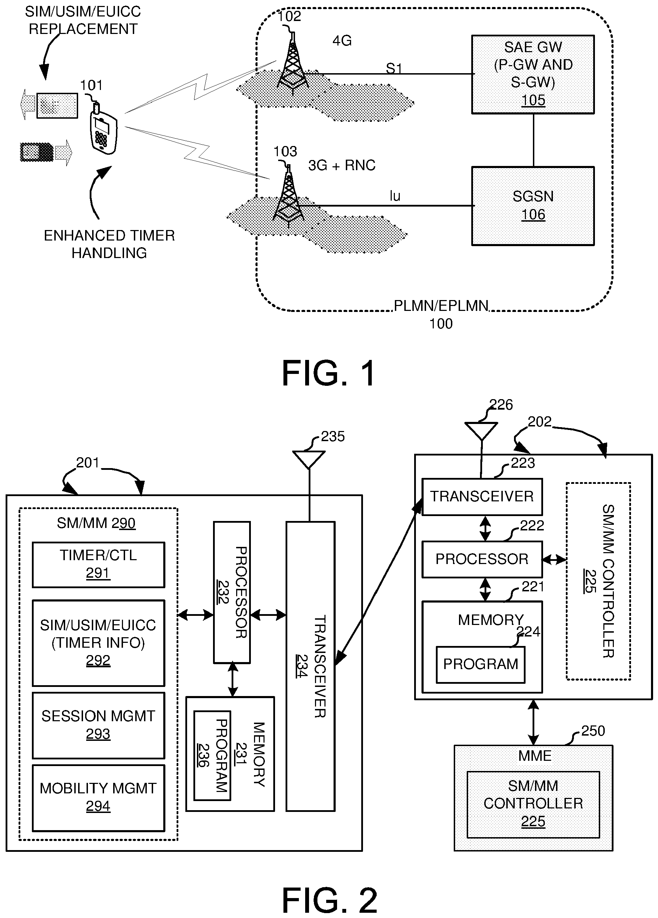

Figure 1 illustrates an exemplary 3GPP system 100 with an enhanced session management procedure in accordance with one novel aspect. 3GPP system 100 is a Public Land Mobile Network (PLMN) or an Equivalent Public Land Mobile Network (EPLMN) that supports one or more wireless radio network access (RAT) networks, such a 4G/LTE system, a 3G system, and possibly a 2G system (not shown). Each of the 3GPP system has a fixed base infrastructure unit, such as wireless communications stations 102 and 103, forming wireless networks distributed over a geographical region. The base unit may also be referred to as an access point, an access terminal, a base station, a NodeB, an eNodeB, or by other terminology used in the art. Each of the wireless communications stations 102 and 103 serves a geographic area. A 4G/LTE system has an evolved node-B (eNodeB) 102 connecting with a system architecture evolution (SAE) gateway 105, which includes the serving gateway (S-GW) and the packet data network (PDN) gateway (P-GW) via the S1 interface. A 3G system has a node-B 103 and a radio network controller (RNC). The RNC of the 3G system connects with a serving GPRS support node (SGSN) 106, which is connected to SAE gateway 105.

A wireless communications device / user equipment (UE) 101 in 3GPP wireless network 100 can be served by eNodeB 102 or by Node-B 103. UE 101 establishes a bearer with 3GPP system 100 for data services. UE 101 establishes EPS bearer in the 4G system via the S1 interface, or establishes a PDP context in the 3G system via the lu interface. Session Management (SM) procedures for 3G/2G systems or Evolved Packet System (EPS) SM (ESM) procedures for 4G systems are applied by UE 101 to support Packet Data Protocol (PDP) context or EPS bearer handling of the user terminal. For example, SM procedures include PDP context activation procedure, secondary PDP context activation procedure, PDP context modification or deactivation procedure, and MBMS corresponding procedures. Similarly, ESM procedures include PDN connectivity or disconnect procedures and Bearer resource allocation or modification procedures. Note that in the following discussion, "SM" is used as a generic term to represent both session management (SM) for 2G/3G systems, as well as EPS session management (ESM) for 4G systems. Similarly, an SM request or SM reject message is used to represent connection/bearer request or reject in all systems.

In the example of Figure 1, to establish an EPS bearer in the 4G system, UE 101 sends a PDN connectivity request to eNodeB 102. Upon receipt of the PDN connectivity request message, the network may reject the request with a cause code. For example, T3396 is for access point name (APN) based congestion control. When the SM/ESM request is rejected by the network with cause code #26, the network may trigger the session management timer T3396. However, when T3396 is triggered by #26, the UE behavior is not defined for corresponding SM/ESM procedures upon SIM/USIM/profile replacement while UE keeps power on. Other NAS level timers such as T3245, T3246, T3396 for mobility management (MM) have similar problems. When those timers are triggered, the UE behavior is not defined for corresponding mobility management procedures upon SIM/USIM replacement while UE keeps power on.

The undefined UE behavior will result in unnecessary barring for the UE when the UE has replaced an old SIM/USIM/profile with a new SIM/USIM/profile while the UE keeps power on. In one novel aspect, an enhanced timer handling is proposed for UE 101 such that corresponding SM/ESM and mobility management procedures are enabled upon SIM/USIM/profile replacement while the UE keeps power on.

Figure 2 illustrates simplified block diagrams of a user equipment UE 201 and a base station BS 202 in accordance with embodiments of the current invention. BS 202 has an antenna 226, which transmits and receives radio signals. A RF transceiver module 223, coupled with the antenna, receives RF signals from antenna 226, converts them to baseband signals and sends them to processor 222. RF transceiver 223 also converts received baseband signals from processor 222, converts them to RF signals, and sends out to antenna 226. Processor 222 processes the received baseband signals and invokes different functional modules to perform features in base station 202. Memory 221 stores program instructions and data 224 to control the operations of base station 202. Base station 202 also includes a set of control circuits, such as a session management and mobility management (SM/MM) controller 225 that carry out functional tasks for session and mobility management features in the 3GPP network. In an alternative embodiment, the SM/MM controller is located in a mobility management entity (MME) 250 within the evolved packet core (EPC), which performs the session and mobility management features in the 3GPP network.

Similarly, UE 201 has an antenna 235, which transmits and receives radio signals. A RF transceiver module 234, coupled with the antenna, receives RF signals from antenna 235, converts them to baseband signals and sends them to processor 232. RF transceiver 234 also converts received baseband signals from processor 232, converts them to RF signals, and sends out to antenna 235. Processor 232 processes the received baseband signals and invokes different functional modules to perform features in the mobile station 201. Memory 231 stores program instructions and data 236 to control the operations of the mobile station 201.

UE 201 also includes a set of control modules and circuits that carry out functional tasks. An SM/MM controller 290 supports session management and mobility management handling in the 3GPP system. For example, the SM/MM controller further comprises a session management handler 293 for activating, modifying, and/or deactivating PDP context in 3G systems, and for establishing PDN connection, allocating/modifying EPS bearer resource in 4G systems. Similarly, mobility management handler 294 handles NAS level mobility management functionalities such as attach procedure, detach procedure, location update, routing area update, tracking area update, and service request. An identification slot (e.g., a SIM/USIM card slot or eUICC/SE/TEE) 292 stores UE identity information and profile, which further comprises timer information associated with various session management and mobility management procedures. Timer and control circuits 291 manages various timers based on timer information, and determines whether the timers can be deactivated or stopped upon SIM/USIM/profile replacement.

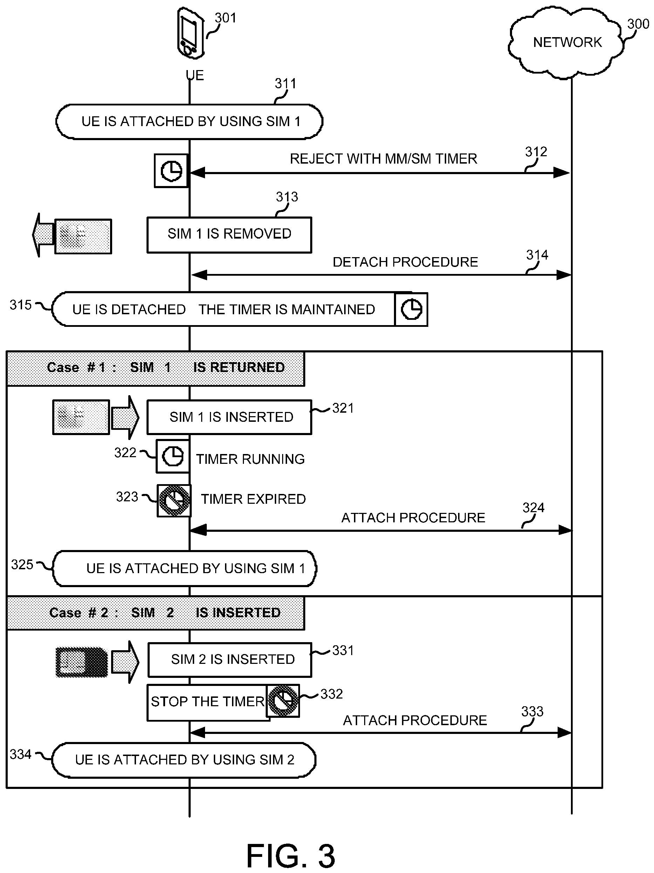

Figure 3 illustrates one embodiment of UE procedure and timer handling when SIM/USIM card is changed with timer running while power-on. In step 311, UE 301 is attached to the network 300 by using a first identification module (SIM1). The first identification module can be a subscriber identification module (SIM) card, a universal subscriber identification module (USIM), a profile within an embedded Universal Integrated Circuit Card (eUICC, sometimes also referred to as an embedded SIM or eSIM), Secure Element (SE), or Trusted Execution Environment (TEE)). In step 312, UE 301 initiates a session management (SM) request or a mobility management (MM) request with the network. In response, UE 301 receives a reject message, which contains a SM/MM timer information. In one embodiment, the timer information comprises a timer value or a residue timer value, and a timestamp. UE 301 then records the timer information associated with SIM1. Alternatively, UE 301 can record the timer information in SIM1. In step 313, a user removes SIM1 from UE 301 while the UE is still powered on. In step 314, UE 301 performs a detach procedure with the network. In step 315, UE 301 is detached, however, the UE maintains the timer and keeps the timer running.

In a first case, SIM1 is returned. In step 321, a user inserts the same SIM1 to UE 301 while the UE is still powered on. Because the inserted SIM1 is the same as the first SIM1, UE 301 keeps the same timer information recorded earlier, and continues to run the timer (step 322). If the timer is not expired, then UE 301 is barred from initiating corresponding SM request or MM request with the network. In step 323, the MM timer expires, and the attach procedure is no longer barred by the network. In step 324, UE 301 performs an attach procedure with the network. In step 325, UE 301 is attached to the network by using the first SIM1.

In a second case, a second identification card SIM2 is inserted. In step 331, a user inserts a second identification module (SIM2) to UE 301 while the UE is still powered on. The second identification module can be a subscriber identification module (SIM) card, a universal subscriber identification module (USIM), a profile within an embedded Universal Integrated Circuit Card (eUICC, sometimes also referred to as an embedded SIM or eSIM), Secure Element (SE), or Trusted Execution Environment (TEE)). In step 332, UE 301 detects that the inserted SIM2 is different from the first SIM1. As a result, UE 301 stops the timer from running. In step 333, UE 301 performs an attach procedure with the network. In step 334, UE 301 is attached to the network by using the second SIM2 without timer running. Because there are no active SM/MM timer running, UE 301 is able to perform corresponding SM/MM procedures with the network.

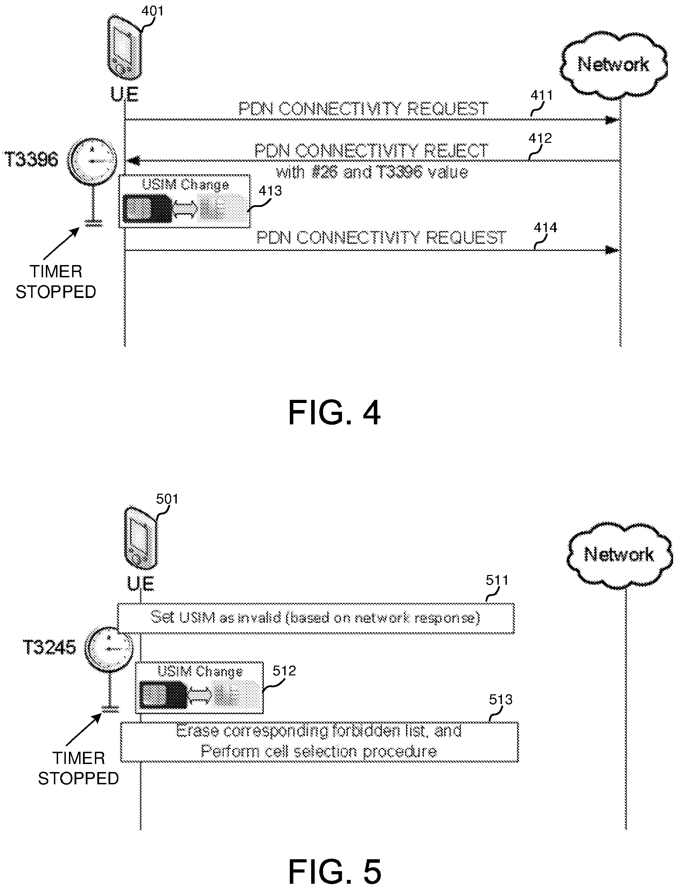

Figure 4 illustrates a solution for enabling SM/ESM procedures upon SIM/USIM replacement with enhanced timer handling. In the example of Figure 4, in step 411, UE 401 send an SM/ESM request message, e.g., a PDN connectivity request to the network. The SM/ESM request may be sent standalone or with ATTACH messages. In step 412, UE 401 receives an SM/ESM reject message, e.g., a PDN connectivity reject from the network. The SM/ESM reject message comprises a cause value #26 indicating insufficient resource. The SM/ESM reject message also comprises a timer value for T3396. The T3396 timer value could be a positive value or deactivated. Upon receiving the SM/ESM reject message, UE 401 starts the T3396 timer if it is configured with a positive value. Later, in step 413, the original SIM/USIM card is replaced with a new SIM/USIM card while the UE remains power on. As a result, upon detecting such change, timer T3396 is stopped by the UE. In step 414, after the initial MM/SM procedures (e.g., ATTACH procedure), UE 401 is able to send another corresponding PDN connectivity request to the network because the UE is no longer barred by such access due to T3396 which is associated with the original SIM/USIM. Therefore, if SIM/USIM is changed, UE 401 may send another PDN CONNECTIVITY REQUEST, BEARER RESOURCE MODIFICATION REQUEST or BEARER RESOURCE ALLOCATION REQUEST message for the same APN.

To summarize, the UE shall not send another ACTIVATE PDP CONTEXT REQUEST message for the same APN that was sent by the MS, until timer T3396 expires, the timer T3396 is stopped, the MS is switched off or the SIM/USIM is removed. The UE shall not send another ACTIVATE PDP CONTEXT REQUEST, ACTIVATE SECONDARY PDP CONTEXT REQUEST or MODIFY PDP CONTEXT REQUEST message for the same APN that was sent by the UE, until timer T3396 expires or timer T3396 is stopped. If the UE is switched off when the timer T3396 is running, and if the SIM/USIM in the UE remains the same when the MS is switched on, the UE shall continue counting T3396. If the timer T3396 is running when the UE enters state GMM-DEREGISTERED, the UE remains switched on, and the SIM/USIM in the UE remains the same, then timer T3396 is kept running until it expires or it is stopped. Although the example is described in 4G scenario, the same applies to 2G/3G as well.

Figure 5 illustrates a solution for enabling UE performing corresponding procedure for T3245 handling upon SIM/USIM replacement. Timer T3245 is used to forbid massive MTC devices retry the attach procedure at the same time when receiving fatal cause values from the network. In the example of Figure 5, in step 511, based on network response (e.g. an attach reject message), UE 501 adds a PLMN identity to the "forbidden PLMN list", the "forbidden PLMNs for attach in S101 mode" list, or the "forbidden PLMNs for GPRS service" list, or sets the USIM as invalid for non-EPS services or EPS services or both. UE 501 also starts the T3245 timer. In step 512, the original SIM/USIM card is replaced with a new SIM/USIM card while the UE remains power on. As a result, upon detecting such change, timer T3245 is stopped by the UE. In step 513, UE 501 erases corresponding forbidden list and performs cell selection procedure because timer T3245 is stopped. Therefore, if the SIM/USIM is changed, then the UE shall erase the "forbidden PLMN list", the "forbidden PLMNs for GPRS service" list, and the "forbidden PLMNs for attach in S101 mode" list and set the SIM/USIM to valid for non-EPS and EPS services. When the lists are erased, the UE performs cell selection.

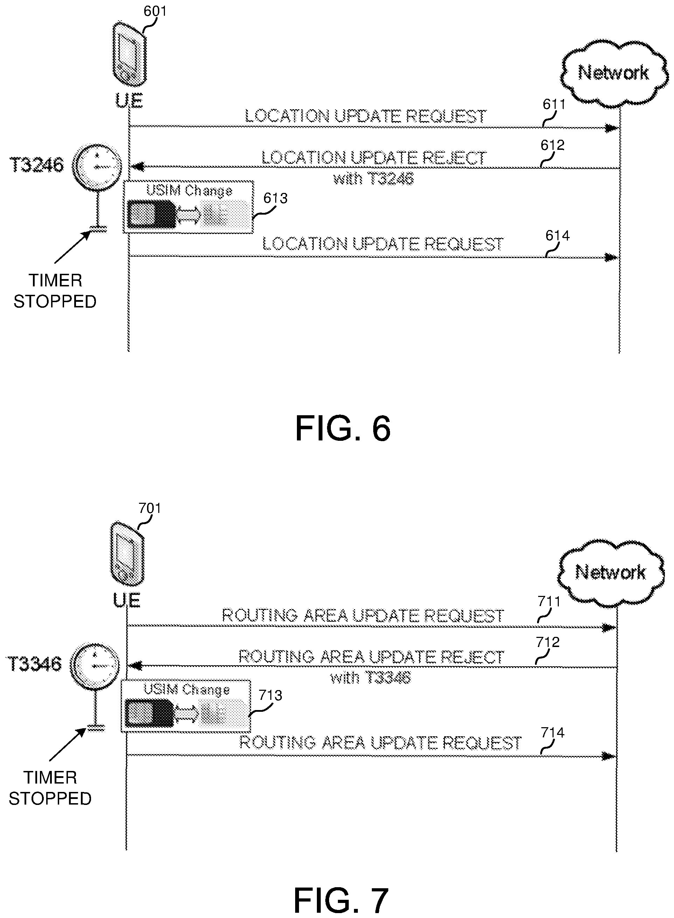

Figure 6 illustrates a solution for enabling UE performing corresponding procedure for T3246 handling upon SIM/USIM replacement. In the example of Figure 6, in step 611, UE 601 send a mobility management request message, e.g., a location update request or CM service request to the network. In step 612, UE 601 receives a mobility management reject message, e.g., a location update reject or CM service reject from the network. The reject message comprises a timer value for T3246, indicating extended wait time for CS domain from the lower layers. Upon receiving the reject message, UE 601 starts the T3246 timer if the NAS level mobility management congestion control is active. Later, in step 613, the original SIM/USIM card is replaced with a new SIM/USIM card while the UE remains power on. As a result, upon detecting such change, timer T3246 is stopped by the UE. In step 614, UE 601 is able to restart the location update procedure or MM service procedure because timer T3246 is stopped. Therefore, if the SIM/USIM is changed, then the UE shall stop timer T3246 when initiating mobility management procedures.

Figure 7 illustrates a solution for enabling UE performing corresponding procedure for T3346 handling upon SIM/USIM replacement. In the example of Figure 7, in step 711, UE 701 send a mobility management request message, e.g., a routing area update request to the network. In step 712, UE 701 receives a mobility management reject message, e.g., a routing area update reject from the network. The reject message comprises a timer value for T3346, indicating extended wait time for PS domain from the lower layers. Upon receiving the reject message, UE 701 starts the T3346 timer if the NAS level mobility management congestion control is active. Later, in step 713, the original SIM/USIM card is replaced with a new SIM/USIM card while the UE remains power on. As a result, upon detecting such change, timer T3346 is stopped by the UE. In step 714, UE 701 is able to initiate the routing area updating procedure or MM procedure because timer T3346 is stopped. Therefore, if the SIM/USIM is changed, then the UE shall stop timer T3346 when initiating mobility management procedures.

To summarize, if the UE is switched off when the timers T3246 and T3346 are running, the UE shall behave as follows for each of these timers when the UE is switched on: continue counting T3346. If the timer T3346 is running when the UE enters state GMM-DEREGISTERED, the UE remains switched on, and the SIM/USIM in the UE remains the same, then timer T3346 is kept running until it expires or it is stopped. If the UE is switched off when the timer T3246 or T3346 is running, the UE shall behave as follows for each running timer when the UE is switched on and the SIM/USIM in the UE remains the same: continue counting T3346. Although the example is described in 4G scenario, the same applies to 2G/3G as well.

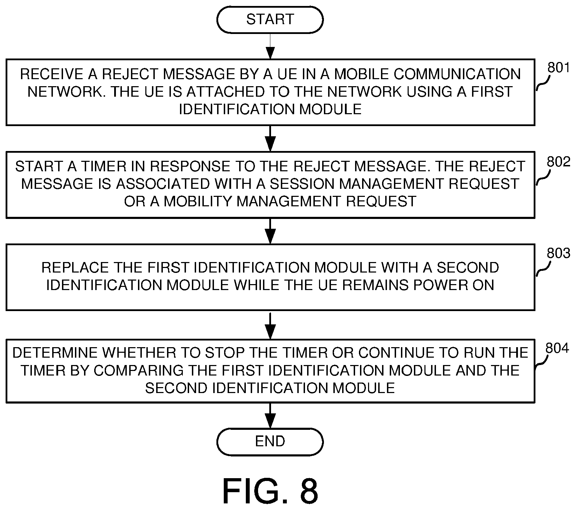

Figure 8 illustrates a flow chart for a method of timer handing upon SIM/USIM/profile replacement from UE perspective in accordance with one novel aspect. In step 801, a user equipment receives a reject message in a mobile communication network. The UE is attached to the network using a first identification module. In step 802, the UE starts a timer in response to the reject message. The reject message is associated with corresponding session management request(s) or mobility management request(s). In step 803, the UE replaces the first identification module with a second identification module while the UE remains power on. In step 804, the UE determines whether to stop the timer or continue to run the timer by comparing the first identification module and the second identification module. In one example, the "identification module" comprises "a subscriber identification module (SIM), a universal subscriber identification module (USIM), or a profile within an embedded Universal Integrated Circuit Card (eUICC)/Secure Element (SE)/Trusted Execution Environment (TEE)".

## Claims

1. A method, comprising:
receiving a reject message by a user equipment, UE (301), in a mobile communication network (300), wherein the UE (301) is attached to the network (300) using a first identification module; and
starting a timer in response to the reject message, wherein the reject message is associated with a session management request or a mobility management request;
wherein the reject message is associated with a session management request, and wherein the timer is a T3396 timer; or
wherein the reject message is associated with a mobility management procedure, and wherein the timer is a T3245 timer; or
wherein the reject message is associated with a mobility management request in circuit switch domain, and wherein the timer is a T3246 timer; or
wherein the reject message is associated with a mobility management request in packet switch domain, and wherein the timer is a T3346 timer; and
wherein the first identification module and the second identification module, respectively, is a Subscriber Identity Module, SIM, or Universal Subscriber Identity Module, USIM,
**characterized by** the method further comprising:
determining whether to stop the timer or continue to run the timer by comparing the first identification module and the second identification module when the first identification module is replaced with a second identification module while the UE (301) remains power on.

2. The method of Claim 1, wherein the UE (301) stops the timer if the second identification module is different from the first identification module.

3. The method of Claim 1, wherein the UE (301) continues to run the timer if the second identification module is the same as the first identification module.

4. The method of Claim 1, wherein the reject message comprises timer information, wherein the timer information further comprises at least one of a timer value, a residual timer value, and a timestamp.

5. The method of Claim 4, wherein the UE (301) records the timer information in the UE (301) associated with the first identification module; or wherein the UE (301) records the timer information in the first identification module.

6. The method of Claim 4, wherein the UE (301) checks timer information of the second identification module before performing an attach procedure with the network (300).

7. A user equipment, UE (201, 301), comprising:
a receiver (234) that is adapted to receive a reject message in a mobile communication network (300), wherein the UE (301) is adapted to be attached to the network (300) using a first identification module;
a timer control circuit (291) adapted to start a timer in response to the reject message, wherein the reject message is associated with a session management request or a mobility management request;
wherein the reject message is associated with a session management request, and wherein the timer is a T3396 timer; or
wherein the reject message is associated with a mobility management procedure, and wherein the timer is a T3245 timer; or
wherein the reject message is associated with a mobility management request in circuit switch domain, and wherein the timer is a T3246 timer; or
wherein the reject message is associated with a mobility management request in packet switch domain, and wherein the timer is a T3346 timer; and
the user equipment, UE (201, 301), further comprising
an identification slot (292), wherein the first identification module in the identification slot (292) is replaceable with a second identification module,
the first identification module and the second identification module, respectively, being a Subscriber Identity Module, SIM, or Universal Subscriber Identity Module, USIM,
**characterized in that**
the timer control circuit (291) is adapted to determine whether to stop the timer or continue to run the timer by comparing the first identification module and the second identification module when the first identification module is replaced with a second identification module while the UE (201, 301) remains power on.

8. The UE (201, 301) of Claim 7, wherein the UE (201, 301) is adapted to stop the timer if the second identification module is different from the first identification module.

9. The UE (201, 301) of Claim 7, wherein the UE (201, 301) is adapted to continue to run the timer if the second identification module is the same as the first identification module.

10. The UE (201, 301) of Claim 7, wherein the reject message comprises timer information, wherein the timer information further comprises at least one of a timer value, a residual timer value, and a timestamp.

11. The UE (201, 301) of Claim 10, wherein the UE (201, 301) is adapted to record the timer information in the UE (201, 301) associated with the first identification module; or wherein the UE (201, 301) is adapted to record the timer information in the first identification module.

12. The UE (201, 301) of Claim 10, wherein the UE (201, 301) is adapted to check timer information of the second identification module before performing an attach procedure with the network (300).

## Patentansprüche

1. Verfahren, aufweisend:
Empfangen einer Ablehnungsnachricht durch eine Benutzereinrichtung, UE (301), in einem Mobilkommunikationsnetzwerk (300), wobei die UE (301) mit einem ersten Identifikationsmodul an das Netzwerk (300) angeschlossen ist; und
Starten eines Timers als Reaktion auf die Ablehnungsnachricht, wobei die Ablehnungsnachricht einer Sitzungsmanagementanforderung oder einer Mobilitätsmanagementanforderung zugeordnet ist;
wobei die Ablehnungsnachricht einer Sitzungsmanagementanforderung zugeordnet ist und wobei der Timer ein T3396-Timer ist; oder
wobei die Ablehnungsnachricht einem Mobilitätsmanagementverfahren zugeordnet ist und wobei der Timer ein T3245-Timer ist; oder
wobei die Ablehnungsnachricht einer Mobilitätsmanagementanforderung in der Circuit-Switch-Domäne zugeordnet ist, und wobei der Timer ein T3246-Timer ist; oder
wobei die Ablehnungsnachricht einer Mobilitätsmanagementanforderung in der Packet-Switch-Domäne zugeordnet ist, und wobei der Timer ein T3346-Timer ist; und
wobei das erste Identifikationsmodul und das zweite Identifikationsmodul jeweils ein Teilnehmeridentifikationsmodul, SIM, oder ein Universalteilnehmeridentifikationsmodul, USIM, ist,
**dadurch gekennzeichnet, dass** das Verfahren ferner aufweist:
Bestimmen, ob der Timer gestoppt oder der Timer weiterlaufen soll, durch Vergleichen des ersten Identifikationsmoduls und des zweiten Identifikationsmoduls, wenn das erste Identifikationsmodul durch ein zweites Identifikationsmodul ersetzt wird, während die UE (301) eingeschaltet bleibt.

2. Verfahren nach Anspruch 1, bei dem die UE (301) den Timer stoppt, wenn sich das zweite Identifikationsmodul von dem ersten Identifikationsmodul unterscheidet.

3. Verfahren nach Anspruch 1, bei dem die UE (301) den Timer weiterlaufen lässt, wenn das zweite Identifikationsmodul das gleiche wie das erste Identifikationsmodul ist.

4. Verfahren nach Anspruch 1, bei dem die Ablehnungsnachricht Timerinformationen aufweist, wobei die Timerinformationen ferner mindestens einen Zeitwert, einen Restzeitwert oder einen Zeitstempel aufweisen.

5. Verfahren nach Anspruch 4, bei dem die UE (301) die Timerinformationen in der dem ersten Identifikationsmodul zugeordneten UE (301) aufzeichnet; oder
wobei die UE (301) die Timerinformationen in dem ersten Identifikationsmodul aufzeichnet.

6. Verfahren nach Anspruch 4, bei dem die UE (301) Timerinformationen des zweiten Identifikationsmoduls überprüft, bevor sie einen Attach-Vorgang mit dem Netzwerk (300) durchführt.

7. Benutzereinrichtung, UE (201, 301), aufweisend:
einen Empfänger (234), der angepasst ist, um eine Ablehnungsnachricht in einem Mobilkommunikationsnetzwerk (300) zu empfangen, wobei die UE (301) angepasst ist, um mit einem ersten Identifikationsmodul an das Netzwerk (300) angeschlossen zu werden;
eine Timersteuerschaltung (291), die angepasst ist, um einen Timer als Reaktion auf die Ablehnungsnachricht zu starten, wobei die Ablehnungsnachricht einer Sitzungsmanagementanforderung oder einer Mobilitätsmanagementanforderung zugeordnet ist;
wobei die Ablehnungsnachricht einer Sitzungsmanagementanforderung zugeordnet ist und wobei der Timer ein T3396-Timer ist; oder
wobei die Ablehnungsnachricht einem Mobilitätsmanagementverfahren zugeordnet ist und wobei der Timer ein T3245-Timer ist; oder
wobei die Ablehnungsnachricht einer Mobilitätsmanagementanforderung in der Circuit-Switch-Domäne zugeordnet ist, und wobei der Timer ein T3246-Timer ist; oder
wobei die Ablehnungsnachricht einer Mobilitätsmanagementanforderung in der Packet-Switch-Domäne zugeordnet ist, und wobei der Timer ein T3346-Timer ist; und
die Benutzereinrichtung, UE (201, 301), ferner aufweist
einen Identifikationsslot (292), wobei das erste Identifikationsmodul in dem Identifikationsslot (292) durch ein zweites Identifikationsmodul austauschbar ist,
wobei das erste Identifikationsmodul und das zweite Identifikationsmodul jeweils ein Teilnehmeridentifikationsmodul, SIM, oder ein Universalteilnehmeridentifikationsmodul, USIM, ist,
**dadurch gekennzeichnet, dass**
die Timersteuerschaltung (291) angepasst ist, um zu bestimmen, ob der Timer gestoppt oder der Timer weiterlaufen soll, indem das erste Identifikationsmodul und das zweite Identifikationsmodul verglichen werden, wenn das erste Identifikationsmodul durch ein zweites Identifikationsmodul ersetzt wird, während die UE (201, 301) eingeschaltet bleibt.

8. UE (201, 301) nach Anspruch 7, bei der die UE (201, 301) angepasst ist, um den Timer zu stoppen, wenn sich das zweite Identifikationsmodul von dem ersten Identifikationsmodul unterscheidet.

9. UE (201, 301) nach Anspruch 7, bei der die UE (201, 301) angepasst ist, um den Timer weiterlaufen zu lassen, wenn das zweite Identifikationsmodul das gleiche wie das erste Identifikationsmodul ist.

10. UE (201, 301) nach Anspruch 7, bei der die Ablehnungsmeldung Timerinformationen aufweist, wobei die Timerinformationen ferner mindestens einen Zeitwert, einen Restzeitwert oder einen Zeitstempel aufweisen.

11. UE (201, 301) nach Anspruch 10, bei der die UE (201, 301) angepasst ist, um die Timerinformationen in der UE (201, 301) aufzuzeichnen, die dem ersten Identifikationsmodul zugeordnet sind; oder
wobei die UE (201, 301) angepasst ist, um die Timerinformationen in dem ersten Identifikationsmodul aufzuzeichnen.

12. UE (201, 301) nach Anspruch 10, bei der die UE (201, 301) angepasst ist, um Timerinformationen des zweiten Identifikationsmoduls zu überprüfen, bevor sie einen Attach-Vorgang mit dem Netzwerk (300) durchführt.

## Revendications

1. Méthode, comprenant les étapes consistant à :
recevoir un message de rejet par un équipement utilisateur, UE (301), dans un réseau de communication mobile (300), dans laquelle l'UE (301) est relié au réseau (300) à l'aide d'un premier module d'identification ; et
démarrer une minuterie en réponse au message de rejet, dans laquelle le message de rejet est associé à une demande de gestion de session ou à une demande de gestion de mobilité ;
dans laquelle le message de rejet est associé à une demande de gestion de session et dans laquelle la minuterie est une minuterie T3396 ; ou
dans laquelle le message de rejet est associé à une procédure de gestion de mobilité, et dans laquelle la minuterie est une minuterie T3245 ; ou
dans laquelle le message de rejet est associé à une demande de gestion de mobilité dans un domaine de commutation de circuit, et dans laquelle la minuterie est une minuterie T3246 ; ou
dans laquelle le message de rejet est associé à une demande de gestion de mobilité dans un domaine de commutation de paquets, et dans laquelle la minuterie est une minuterie T3346 ; et
dans laquelle le premier module d'identification et le second module d'identification, respectivement, sont un module d'identité d'abonné, SIM, ou un module d'identité d'abonné universel, USIM,
**caractérisée en ce que** la méthode comprend en outre les messages consistant à :
déterminer s'il faut ou non arrêter le minuteur ou continuer à exécuter la minuterie en comparant le premier module d'identification et le second module d'identification lorsque le premier module d'identification est remplacé par un second module d'identification alors que l'UE (301) reste sous tension.

2. Méthode selon la revendication 1, dans laquelle l'UE (301) arrête le minuteur si le second module d'identification est différent du premier module d'identification.

3. Méthode selon la revendication 1, dans laquelle l'UE (301) continue à exécuter la minuterie si le second module d'identification est identique au premier module d'identification.

4. Méthode selon la revendication 1, dans laquelle le message de rejet comprend des informations de minuterie, dans laquelle les informations de minuterie comprennent en outre au moins une valeur parmi une valeur de minuterie, une valeur de minuterie résiduelle et une estampille temporelle.

5. Méthode selon la revendication 4, dans laquelle l'UE (301) enregistre les informations de minuterie dans l'UE (301) associées au premier module d'identification ; ou
dans laquelle l'UE (301) enregistre les informations de minuterie dans le premier module d'identification.

6. Méthode selon la revendication 4, dans laquelle l'UE (301) vérifie les informations de minuterie du second module d'identification avant d'effectuer une procédure de liaison avec le réseau (300).

7. Equipement utilisateur, UE (201, 301), comprenant :
un récepteur (2341) qui est adapté pour recevoir un message de rejet dans un réseau de communication mobile (300), dans lequel l'UE (301) est adapté pour être relié au réseau (300) à l'aide d'un premier module d'identification ;
un circuit de commande de minuterie (291) adapté pour démarrer une minuterie en réponse au message de rejet, dans lequel le message de rejet est associé à une demande de gestion de session ou à une demande de gestion de mobilité
dans lequel le message de rejet est associé à une demande de gestion de session et dans lequel la minuterie est une minuterie T3396 ; ou
dans lequel le message de rejet est associé à une procédure de gestion de mobilité, et dans lequel la minuterie est une minuterie T3245 ; ou
dans lequel le message de rejet est associé à une demande de gestion de mobilité dans le domaine de commutation de circuit, et dans lequel la minuterie est une minuterie T3246 ; ou
dans lequel le message de rejet est associé à une demande de gestion de mobilité dans le domaine de commutation de paquets, et dans lequel la minuterie est une minuterie T3346 ; et
l'équipement utilisateur, UE (201, 301), comprenant en outre
un intervalle d'identification (292), dans lequel le premier module d'identification dans l'intervalle d'identification (292) peut être remplacé par un second module d'identification,
le premier module d'identification et le second module d'identification, respectivement, étant un module d'identité d'abonné, SIM, ou un module d'identité d'abonné universel, USIM,
**caractérisé en ce que**
le circuit de commande de minuterie (291) est adapté pour déterminer s'il faut ou non arrêter la minuterie ou continuer d'exécuter la minuterie en comparant le premier module d'identification et le second module d'identification lorsque le premier module d'identification est remplacé par un second module d'identification tandis que l'UE (201, 301) reste sous tension.

8. UE (201, 301) selon la revendication 7, dans lequel l'UE (201, 301) est adapté pour arrêter la minuterie si le second module d'identification est différent du premier module d'identification.

9. UE (201, 301) selon la revendication 7, dans lequel l'UE (201, 301) est adapté pour continuer à exécuter le minuteur si le second module d'identification est identique au premier module d'identification.

10. UE (201, 301) selon la revendication 7, dans lequel le message de rejet comprend des informations de minuterie, dans lequel les informations de minuterie comprennent en outre au moins une valeur parmi une valeur de minuterie, une valeur de minuterie résiduelle et une estampille temporelle.

11. UE (201, 301) selon la revendication 10, dans lequel l'UE (201, 301) est adapté pour enregistrer les informations de minuterie dans l'UE (201, 301) associé au premier module d'identification ; ou dans lequel l'UE (201, 301) est adapté pour enregistrer les informations de minuterie dans le premier module d'identification.

12. UE (201, 301) selon la revendication 10, dans lequel l'UE (201, 301) est adapté pour vérifier les informations de minuterie du second module d'identification avant d'effectuer une procédure de liaison avec le réseau (300).
